# EUROPEAN PATENT SPECIFICATION

(11) **EP 2 001 339 B1**
(45) Date of publication and mention of the grant of the patent: **06.05.2015**
(21) Application number: 07711300.9
(22) Date of filing: 30.03.2007
(51) Int. Cl.: A47C 20/08, F16H 25/00

(54) **LINEAR ACTUATOR WITH POTENTIOMETER**
LINEAR AKTUATOR MIT SCHIEBEPOTENTIOMETER
ACTIONNEUR LINÉAIRE AVEC POTENTIOMÈTRE

(30) Priority: 30.03.2006 DK 200600454
(43) Date of publication of application: 17.12.2008
(73) Proprietor: LINAK A/S, 6430 Nordborg (DK)
(72) Inventor: FROST, John Hansen, 6400 Sønderborg (DK)
(74) Representative: Pedersen, Soeren Skovgaard
(86) International application number: PCT/DK2007/000159
(87) International publication number: WO 2007/112745

(56) References cited:
- EP-A2- 0 177 693
- EP-B2- 0 372 032
- DE-A1- 2 221 675
- GB-A- 2 095 644
- GB-A- 2 117 828

## Description

The present invention relates to a linear dual actuator for sitting and/or lying furniture as stated in the preamble of claim 1.

These types of actuators are for instance known from DE 38 42 078 C2 to Dietmar Koch and EP 0 372 032 B2 to Eckhart Dewert. The introduction of this type of actuators, which are primarily relatively inexpensive, to the private bed marked, has brought about a pronounced interest for electrically adjustable furniture, as it at the same time has been followed by a parallel product development to bring the furniture into a price range, which makes them available to the common man. Fundamentally, the basic function of the actuators, to raise and lower the back rest and leg rest section of the bed, has not been altered since the emergence in the early eighties. A recent construction with only one motor is known from WO 2005/122840 A1 to Linak A/S.

In the actuators the end-positions of the adjustable sections are determined by means of end-stop switches located along the path of the spindle nut, so that said spindle nut activates the respective switches in the outer positions. In one of the end-position the section assumes a horizontal position and in the other end-position the section assumes its fully raised position.

The purpose of the invention is to provide another solution to determining the end-positions in this type of actuators, and which at the same time are no more expensive or essentially no more expensive, and which at the same time makes it possible to detect intermediate positions between the two end-positions.

This is achieved according to the invention by constructing the actuator as stated in claim 1. By using a sliding potentiometer for determining the end-positions, it is even possible to register random intermediate positions, what is more, as an absolute measurement. The sliding potentiometer is fixed in the housing parallel to the spindle whereas the spindle nut is mechanically connected to the adjustment element of the sliding potentiometer. In an especially expedient embodiment, the sliding potentiometer is mounted on the same circuit board as the control, which materially eases the assembly process. If the two sections are arranged to move dependent on each other, i.e. that the leg rest section is forcibly controlled in proportion to the back rest section, one single potentiometer is sufficient for instance for the drive in the back rest. section. Opportunely, a sliding potentiometer is arranged in connection with separate drives for the back rest and the leg rest section, which provides basis for a simpler controlling and the fact that the sections may be controlled individually. It also provides for enhanced proof that the section does not move beyond its movement path. As it primarily concerns actuators in the inexpensive end of the price scale, and a great accuracy and sophistical control of the adjustable sections are not expected, relatively inexpensive sliding potentiometers can be used, which primarily are relatively accurate and reliable. They are in a way not more expensive than two of the usually used end-stop switches. When no particular demands for ability are made the control can be made correspondingly inexpensive. It is, for instance, sufficient to determine one single intermediate position, in which the user will be positioned in a reading position in the bed.

To keep the record straight it is noted that absolute and relative positioning using rotary potentiometers are known from single actuators, which for instance are used in hospital and care beds and also in the expensive end of beds for private use. An example of a single actuator with rotary potentiometers appears from EP 0 831 250 to A2 Dana Corp. A single actuator with encoders comprising a circular disc shaped magnet with four poles arranged in connection with read switches are being manufactured by LINAK A/S under the designation LA31. The basic construction is shown in EP 647 799 B1, where the disc shaped magnet is shown on the back of the worm wheel.

An example of slatted beds and dual actuators will be explained more fully below with reference to the accompanying drawing, in which:
Fig. 1 shows a slatted bed with raised back rest and leg rest section,
fig. 2 shows a perspective view of a dual actuator,
fig. 3 shows a longitudinal section through the left-hand end of the actuator shown in fig. 2 and which operates the head section, and
fig. 4 shows a perspective view of a dual actuator shown in open state.

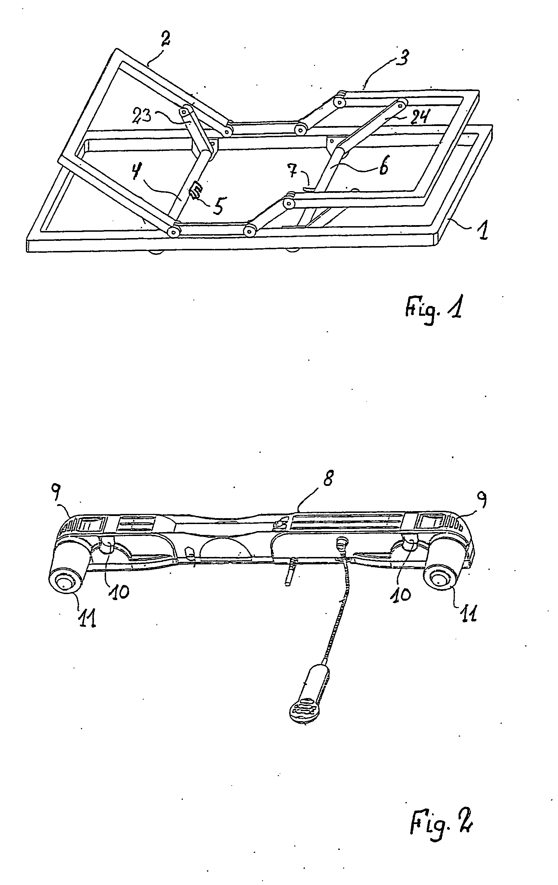

As it appears from fig. 1 the slatted bed comprises a frame 1, in which a back rest section 2 and an articulated leg rest section 3 is embedded. Embedded in the frame is a transverse shaft 4, for the back rest section 2, on which is mounted a short arm 5. On each end of the shaft is mounted a rod 23, connected to the back rest section. Correspondingly, a shaft 6 with a short arm 7 is provided for the leg rest section 3. Accordingly, a rod 24 is connected to the leg rest section 3 at the end of the shaft 6.

The movement of the back and leg rest section 2,3 is brought about with a dual actuator as shown in fig. 2. The actuator comprises a housing 8 with an openable cover 9, giving access to a traverse shaft opening 10. In connection with the shaft openings is a drive driven by a low voltage DC-motor 11, arranged perpendicular to the housing. Over a worm drive 13, the motor 11 drives a spindle 14, on which a spindle nut constructed as a sliding element 12 is mounted. The sliding element is guided secured against rotation in the housing, and by rotation of the spindle 14 the sliding element 12 is moved back and forth depending on the direction of rotation of the spindle. As the arm 5 on the pivot shaft 4 of the back rest section rests against the end of the sliding element 12, the back rest section is pivoted up and down, respectively. The drive in the other end of the actuator correspondingly operates the leg rest section.

The actuator is mounted on the slatted bed by pulling the covers 9 outwards and leading the actuator in, until the shafts 4,6 rest in the apertures 10 and in the arms 5,7. The covers 9 are closed again, at which the actuator hangs on the shafts 4,6. By activation of the drives the shafts are pivoted, by means of which the back rest and the leg rest section, respectively, is raised or lowered.

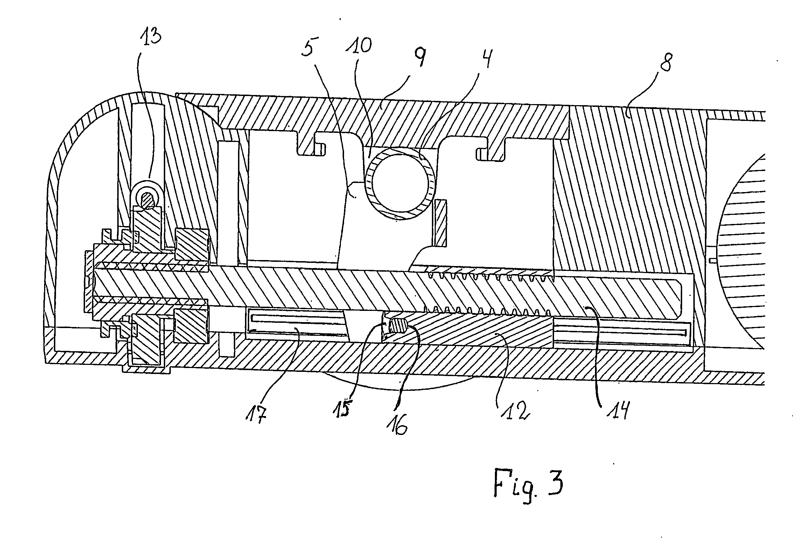

Fig. 3 of the drawing shows a longitudinal section through the end of the actuator, which operates the back rest section 2. To be more explicit, the section is through the longitudinal shaft of the spindle. The arm 5 on the pivot shaft 4 is claw shaped and strides across the spindle 14 with two fingers, and rests loosely against the front part of the spindle nut 12 by means of two rolls 15 mounted on a common shaft 16 at the front part of the spindle nut. The weight of the back rest section 2 keeps the arm in engagement with the spindle nut. Parallel to the spindle nut 12 a sliding potentiometer 17 is mounted in the housing, whose operation element, in the form of a slide, is mechanically connected to the spindle nut 12 so that the slide of the potentiometer slavishly follows the spindle nut. From this the end-positions of the back rest section can be determined. One is no longer beforehand bound by fixed positions like when using end-stop switches. If needed, individual adjustment of the end-positions can be carried out. Moreover it is also possible to determine various intermediate positions. Finally, the positioning involved is an absolute positioning, so that even in case of adjustment without using the motor and in case of power failure the precise position of the section is always detectable. The potential of possibilities provided with the sliding potentiometer must be seen in connection with the available control, as this now determines the boundaries for the various functions, whereas it formerly was the end-stop switches. In this connection it must still be considered that, the type of product concerned belongs to the lower end of the price range.

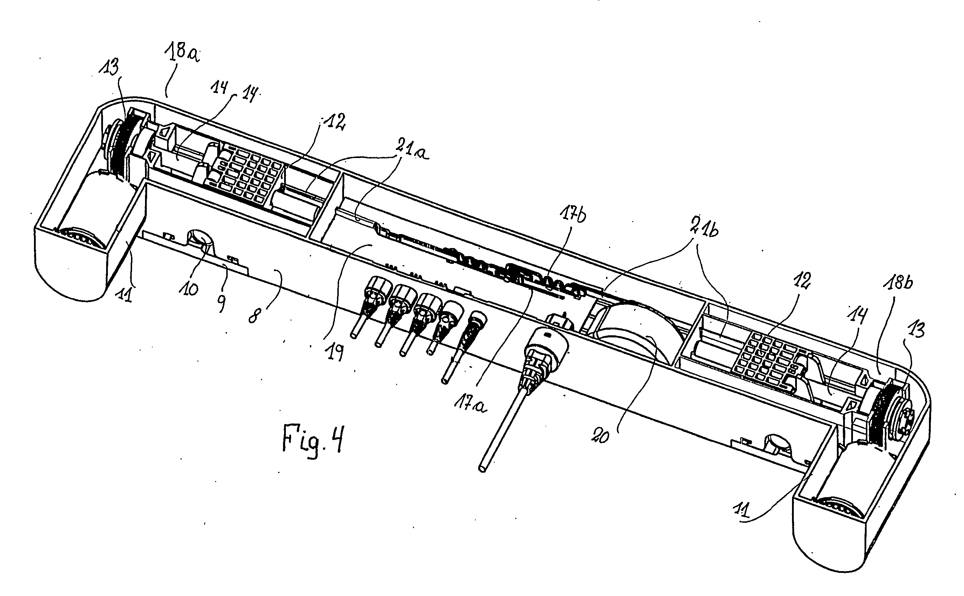

In the dual actuator shown in fig. 4 of the drawing the drives 18a,18b can be seen in each end of the actuator with a circuit board 19 and a power supply based on a transformer 20. The drives 18a,18b are incidentally identical and corresponds to what is shown in fig. 3. Two potentiometers 17a,17b are mounted on the circuit board 19, which is connected to the spindle nuts 12 in the respective drives at the ends by means of a rod connection 21a,21b. The rod connections 21a,21b are incidentally equipped with a hinge joint, so that, when folded up, they lean over the circuit board, which gives advantages in the shipment and assembly areas. To keep the record straight it is noted that the dual actuator here is shown with the bottom facing upwards and in its open state.

As an example of sliding potentiometers the RSAON11 Series from ALPS Electric CO., Ltd. can be mentioned.

With the invention a dual actuator is thus provided, which overcomes the tradition-bound determination of the end-positions by means of end-stop switches. In addition to this a possibility is provided to introduce various intermediate positions, if desired.

## Claims

1. Linear dual actuator for sitting and/or lying furniture with at least one, by means of an arm (5) mounted on a pivot shaft (4), adjustable section (2,3), said dual actuator comprises a housing (8) with an aperture (10) for the pivot shaft (4) and where the arm (5) after the assembly of the actuator reaches into the housing (8), and a drive arranged in each end of the housing driven by an electromotor (11) over a transmission (13), said drive comprising a spindle (14) whose one end is operatively connected to the transmission (13), a spindle nut constructed as a power transmitting sliding element (12) mounted on the spindle (14) and secured against rotation, and which can be brought into engagement with the arm (5) for adjusting the section (2,3), and a control, and where the actuator further comprises a power supply and a control unit, for instance a hand control,
**characterized in,**
**that** it comprises a sliding potentiometer (17) with an adjustment element arranged in the housing parallel to the spindle (14), and where the spindle nut (12) is mechanically connected to the adjustment element of the sliding potentiometer (17).

2. Linear dual actuator according to claim 1, **chara cterized** in that the sliding potentiometer (17) and the control are mounted on a common circuit board.

3. Linear dual actuator according to claim 1 or 2, **cha racterized** in that a sliding potentiometer is arranged in connection with each drive.

## Patentansprüche

1. Lineares Doppelstellglied für Sitz- und / oder Liegemöbel mit mindestens einem Abschnitt (2, 3), der mittels eines auf einer Schwenkwelle (4) angebrachten Arms (5) ein- bzw. verstellbar ist, wobei das Doppelstellglied ein Gehäuse (8), das mit einer Öffnung (10) für die Schwenkwelle (4) versehen ist und bei dem nach Zusammenbau des Stellglieds der Arm (5) in das Gehäuse (8) reicht, und einen Antrieb umfasst, der an jedem Ende des Gehäuses, angetrieben von einem Elektromotor (11) über eine Transmission (13), angeordnet ist, wobei der Antrieb eine Spindel (14), deren eines Ende mit der Transmission (13) wirkverbunden ist, eine Spindelmutter, die als Kraft übertragendes Gleitelement (12) ausgebildet, auf der Spindel (14) angebracht und gegen Drehung gesichert ist, und die mit dem Arm (5) zum Ein- bzw. Verstellen des Abschnitts (2, 3) in Eingriff zu bringen ist, sowie eine Steuerung umfasst, und wobei das Stellglied weiter eine Energieversorgung und eine Steuereinheit, beispielsweise eine Handsteuerung, umfasst,
**dadurch gekennzeichnet, dass**
es ein Gleitpotentiometer (17) mit einem Ein- bzw. Verstellelement umfasst, das in dem Gehäuse parallel zu der Spindel (14) angeordnet ist, und wobei die Spindelmutter (12) mechanisch mit dem Ein- bzw. Verstellelement des Gleitpotentiometers (17) verbunden ist.

2. Doppelstellglied nach Anspruch 1, **dadurch gekennzeichnet, dass** das Gleitpotentiometer (17) und die Steuerung auf einer gemeinsamen Schaltungsplatte angebracht sind.

3. Doppelstellglied nach Anspruch 1 oder 2, **dadurch gekennzeichnet, dass** ein Gleitpotentiometer (17) in Verbindung mit jedem Antrieb angeordnet ist.

## Revendications

1. Actionneur double linéaire destiné à des meubles de position assise et/ou couchée avec au moins une, au moyen d'un bras (5) monté sur un arbre pivot (4), section réglable (2, 3), ledit actionneur double comprenant un logement (8) avec une ouverture (10) pour l'arbre pivot (4) et où le bras (5) après l'assemblage de l'actionneur pénètre à l'intérieur du logement (8), et un entraînement agencé dans chaque extrémité du logement entraîné par un électromoteur (11) par l'intermédiaire d'une transmission (13), ledit entraînement comprenant une broche (14) dont une extrémité est raccordée fonctionnellement à la transmission (13), un écrou de broche construit comme un élément coulissant transmettant la puissance (12) monté sur la broche (14) et qui ne peut pas tourner, et qui peut être amené en prise avec le bras (5) pour régler la section (2, 3), et une commande, et où l'actionneur comprend en outre une source d'alimentation et une unité de commande, par exemple une commande à main,
**caractérisé en**
**ce qu'**il comprend un potentiomètre coulissant (17) avec un élément de réglage agencé dans le logement parallèle à la broche (14), et où l'écrou de broche (12) est mécaniquement raccordé à l'élément de réglage du potentiomètre coulissant (17).

2. Actionneur double linéaire selon la revendication 1, **caractérisé en ce que** le potentiomètre coulissant (17) et la commande sont montés sur une carte de circuit commune.

3. Actionneur double linéaire selon la revendication 1 ou 2, **caractérisé en ce qu'**un potentiomètre coulissant est agencé en connexion avec chaque entraînement.
